**Europäisches Patentamt**

**European Patent Office**

**Office européen des brevets**

(19)

(11) Veröffentlichungsnummer : **0 227 718 B1**

(12) # EUROPÄISCHE PATENTSCHRIFT

(45) Veröffentlichungstag der Patentschrift :
02.05.91 Patentblatt 91/18

(51) Int. Cl.⁵ : **A01G 13/04**

(21) Anmeldenummer : **86903334.0**

(22) Anmeldetag : **16.05.86**

(86) Internationale Anmeldenummer :
**PCT/EP86/00295**

(87) Internationale Veröffentlichungsnummer :
**WO 86/06929 04.12.86 Gazette 86/26**

(54) SCHUTZHAUBE ZUR AUFZUCHT VON KULTURPFLANZEN, INSBESONDERE TOMATENPFLANZEN.

(30) Priorität : **21.05.85 CH 2166/85**

(43) Veröffentlichungstag der Anmeldung :
**08.07.87 Patentblatt 87/28**

(45) Bekanntmachung des Hinweises auf die
Patenterteilung :
**02.05.91 Patentblatt 91/18**

(84) Benannte Vertragsstaaten :
**AT BE CH DE FR GB IT LI LU NL SE**

(56) Entgegenhaltungen :
**CH-A- 634 458**
**DE-A- 1 782 150**
**DE-A- 2 647 398**
**FR-A- 1 512 100**

(73) Patentinhaber : **BREVETEAM S.A.**
**c/o Dr. Paul Stadlin Gartenstrasse 2 Postfach
758**
**CH-6300 Zug (CH)**

(72) Erfinder : **Der Erfinder hat auf seine Nennung
verzichtet**

(74) Vertreter : **Lesser, Karl-Bolko, Dipl.-Ing.
European Patent Attorney
Johanneskirchnerstrasse 149a
W-8000 München 81 (DE)**

**Beschreibung**

Die Erfindung betrifft eine Schutzhaube zur Aufzucht von an Stützen, wie Pfählen, Stickeln od.dgl. hochzuziehenden Kulturpflanzen, insbesondere Tomatenpflanzen, gemäß Oberbegriff des Anspruches 1.

Eine gattungsgemäße Schutzhaube ist aus der DE-A2.647.398 bekannt. Diese Schutzhaube besteht im wesentlichen aus einem mit schlitzartigen Öffnungen versehenen Folienschlauch, dessen eines Ende an der Stütze und dessen anderes Ende am oder im Erdboden festlegbar ist. Dieser Folienschlauch weist längliche, gerade Schlitze auf. Die Schlitze liegen bei einer Ausführungsform der bekannten Schutzhaube quer zur Längsachse des Folienschlauches und damit zu der Stütze, bei einer anderen, zweiten Ausführungsform parallel zu diesen.

Die länglichen Schlitze sind in zueinander parallelen Reihen, in denen sich auch die Schlitze erstrecken, angeordnet und Schlitze benachbarter Reihen sind gegeneinander versetzt. Wird nun der Folienschlauch quer zur Längserstreckung der Schlitze gedehnt, so verwinden sich die zwischen den Schlitzen benachbarter Reihen befindlichen Stege und die Schlitze verformen sich zu linsenförmigen Öffnungen. Je nach Größe der Dehnung ist die dabei entstehende Öffnung verschieden groß.

Während des Wachsens der Pflanzen, wobei das Volumen der Pflanzen größer wird, liegt die Pflanze an der Innenseite der Schutzhaube an und dehnt den Folienschlauch, wodurch sich die einzelnen Schlitze mit dem Wachsen der Pflanze mehr und mehr öffnen.

Durch das beim Wachsen der Pflanzen allmähliche Öffnen der Schlitze zu linsenförmigen Öffnungen wird der Innenraum der Schutzhaube, unter der sich die Pflanze befindet, durch den Folienschlauch hindurch immer mehr mit der Umgebung der Schutzhaube verbunden.

Solche bekannten Schutzhauben haben sich an und für sich bewährt.

Herrscht, insbesondere während des Abschlusses des Wachstums der Pflanzen, insbesondere von Tomatenpflanzen, sehr starker Regen, so kann es vorkommen, daß die Pflanzen nicht optimal gedeihen, da der Pflanze zuviel Wasser zugeführt wird, während dem Sproß, insbesondere der Tomatenpflanzen in dieser Zeit möglichst überhaupt kein Wasser zugeführt werden sollte. Da die zwischen den Stegen befindlichen Schlitze gerade Schlitze sind, kann die Verwindung der Stege nicht vorherbestimmt werden. Der Wahrscheinlichkeit nach können die Hälfte der Stege so verwunden sein, daß von der Schutzhaube herabfließendes Wasser, insbesondere Regenwasser, in das Innere der Schutzhaube fließt. Die Tomatenpflanzen werden deshalb zu naß.

Aus der FR-A-1.512.100 ist ein Folientunnel mit schuppenförmigen Schlitzen bekannt. Die Folie dieses Folientunnel ist halbzylinderförmig aufgespannt, wobei die Achse dieses Halbzylinders horizontal angeordnet ist.

Läuft Regenwasser über diesen Folientunnel ab, so drückt das Gewicht des Wassers und auch das Eigengewicht der jeweiligen Lasche die Lasche nach unten in das Innere des Tunnels hinein. Dadurch läuft das Regenwwasser immer in das Innere des Tunnels hinein. Ein gezieltes Steuern des Regenwassers ist mit diesem Folientunnel nicht möglich. Über den Bogen des Tunnels gesehen liegen die Laschen schräg bis flach. Durch diese Ausbildung wölben sich die Laschen – wenn überhaupt – immer nach innen.

Aus der DE-A-1.782.150 ist eine Folie bekannt, die V-förmig ausgebildete Klappen aufweist. Diese Folie kann auch zur Abdeckung von Bodenpflanzen verwendet werden, wobei sie dann unmittelbar auf den bepflanzten Boden abgelegt wird. Durch die von den Klappen gebildeten Öffnungen wachsen die Pflanzen hindurch, wobei dabei die Klappen nach oben geöffnet werden.

Wird die Folie auf einen Hang gelegt, so kommt es gemäß der Beschreibung dieser DE-A-1.782.150 auf die Ausrichtung der Klappen an, ob über die Folie ablaufendes Wasser durch die Folie hindurchlaufen kann oder nicht.

Es wird zwar beschrieben, daß dann, wenn die Klappen am Hang abwärts gerichtet sind, im wesentlichen kein Wasser durch die Folie hindurchfließen kann. Die Praxis erweist aber, daß zum einen durch das Eigengewicht der Klappen und zum anderen durch das Gewicht des herablaufenden Regenwasser die Klappen immer aus der Ebene der Restfolie heraus nach unten verschwenken und so das Durchdringen des Regenwassers ermöglichen.

Die in dieser DE-A-1.782.150 beschriebene Möglichkeit des gewollten Eindringens des Regenwassers durch Anordnung der Folie mit nach schräg oben gerichteten Klappenspitzen ist im wesentlichen nur dann richtig, wenn heranwachsende Pflanzen die Klappen nach oben öffnen. Auch hier schwenken nämlich in der Praxis die Klappen durch ihr Eigengewicht bzw. gegebenenfalls durch das Gewicht des Regenwassers, insbesondere bei starkem Regen, nach unten aus oder liegen zusammen mit der Restfolie auf dem Boden auf.

Der Erfindung liegt deshalb die Aufgabe zugrunde, eine gattungsgemäße Schutzhaube zu schaffen, bei der auch beim allmählichen Öffnen der schlitzartigen Öffnugen die Verwindung der zwischen den Schlitzen befindlichen Stege gesteuert werden kann, sodaß insbesondere das Wasser gesteuert am Eindringen in die Schutzhaube gehindert wird, ein Eindringen des Wassers, falls gewünscht, aber auch erzielbar ist.

Diese Aufgabe wird durch die Erfindung gelöst. Die erfindungsgemäße Schutzhaube ist dadurch gekennzeichnet, daß der Folienschlauch V- oder schuppenförmig ausgebildete Schlitze aufweist und die freien Enden der Schenkel der V-oder schuppenförmigen Schlitze auf das eine Ende des Folienschlauches zu und die Spitze bzw. die Wölbung der V-oder schuppenförmigen Schlitze auf das andere Ende des Folienschlauches zu weisen. Ein solcher Folienschlauch einer Schutzhaube wird so an einer Stütze, wie einem Pfahl, festgelegt, daß die Schlitze mit ihren Spitzen bzw. Wölbungen nach unten gerichtet sind, wobei das obere Ende des Folienschlauches an dem Pfahl festgelegt, z.B. festgebunden, wird. Im Bereich dieser Festlegungsstelle am Pfahl bis kurz darunter kann der Folienschlauch öffnungsfrei ausgebidet sein. Das Regenwasser kann in diesem Bereich überhaupt nicht in die Schutzhaube eindringen. Der darunterliegende Bereich weist die V- oder schuppenförmig ausgebildeten Schlitze auf, wobei deren Spitze nach unten und die freien Enden der Schenkel der Schlitze nach oben gerichtet sind bzw. deren Wölbung nach unten gerichtet ist. Dann kann auf der Schutzhülle ablaufendes Wasser auch bei geöffneten Schlitzen nicht in die Schutzhaube eindringen, da die Schlitze entweder geschlossen sind oder sich bei einer Dehnung des Folienschlauches die zwischen den Schenkeln gebildete Lasche bzw. die Schuppe nach außen vorwölbt. Sind die Schlitze jedoch umgekehrt ausgerichtet, d.h., mit den Spitzen bzw. Wölbungen nach oben, so läuft auf der Schutzhaube ablaufendes Wasser in die Schutzhaube hinein. Dieser Effekt kann dann ausgenutzt werden, wenn möglichst viel Wasser in die Schutzhaube hineingeführt werden soll, andererseits jedoch die Pflanze vor dem unmittelbaren Auftreffen von Regentropfen, insbesondere bei sogenannten Wolkenbrüchen, geschützt sein soll.

Wird nun der Folienschlauch sowohl oben am Pfahl, als auch unten im oder am oder über dem Boden festgelegt und dehnt die wachsende Pflanze den Folienschlauch insbesondere quer zur Erstreckung des Pfahles, so öffnen sich die Schlitze, wobei sich die zwischen den beiden Schenkeln jeweils eines V-förmig ausgebildeten Schlitzes befindlichen Laschen bzw. die Schuppen nach außen auswölben.

Während des Wachstums der Pflanzen dehnt sich der Folienschlauch allmählich, weshalb auch die Öffnung der Schlitze allmählich vor sich geht.

Das Dehnen des Folienschlauches kann auch dadurch erreicht werden, daß von Hand die obere Festlegungsstelle am Pfahl nach oben verschoben wird und somit der Schlauch in seiner Länge ausgezogen wird.

Die Befestigung des Folienschlauches kann auch mit am Erdboden festgelegten Schnüren oder dergleichen vorgenommen werden, wenn das untere Ende des Folienschlauches vom Erdboden beabstandet ist.

Wie sich aus dem Obengesagten ergibt, kann ein und derselbe Folienschlauch, insbesondere wenn er an einen der beiden Enden schlitzfreie Bereiche aufweist, sowohl zum Abhalten, als auch zum gezielten Zuführen von Wasser in die Schutzhaube benutzt werden, in dem der Schlauch einfach andersherum, d.h. mit dem sonst oberen Ende nach unten bzw. umgekehrt, verwendet wird, da sich die Laschen bzw. die Wölbungen zwischen den Stege immer nach außen öffnen und z.B. dann als Auffangtaschen dienen können.

Weitere Einzelheiten und Vorteile der Erfindung ergeben sich aus den Unteransprüchen und aus im Folgenden anhand der Zeichnung beschriebenen Ausführungsbeispielen
Es zeigt :
Figur 1 eine Schutzhaube, die an einem Pfahl befestigt ist, in der Seitenansicht, und
Figur 2 einen vergrößerten Ausschnitt aus einem für die Schutzhaube verwendeten und flachgelegten Folienschlauch.

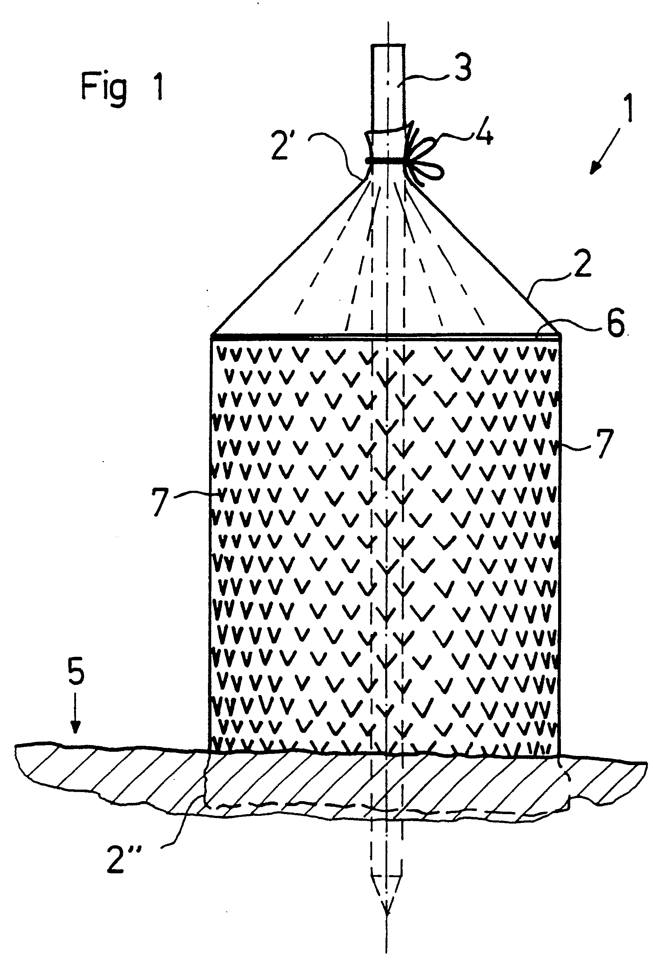

Figur 1 zeigt eine Schutzhaube 1, die aus einem Folienschlauch 2 besteht, der mit seinem oberen Ende 2' an einer Stütze, hier einem Pfahl 3, z.B. mittels einer Schnur 4 zusammengeschnürt und festgelegt ist.

Das untere Ende 2" des Folienschlauches 2 ist hier im Erdboden 5 eingegraben.

Beabstandet vom oberen, am Pfahl 3 festgelegten Ende 2' des Folienschlauches 2 ist hier eine Stützeinrichtung, z.B. ein Stützring 6, in dem Folienschlauch 2 angeordnet, der z.B. mittels nicht dargestellter Schnüre oder Drähte an dem Pfahl 3 in vertikler Richtung gehalten ist. Dieser Stützring 6 spreizt den Folienschlauch 2 auf seinen "Grunddurchmesser" auch dann auf, wenn die Pflanze noch nicht so groß gewachsen ist.

Der Folienschlauch 2 ist im Bereich des einen Endes – hier zwischen der obern Festlegungsstelle des Folienschlauches 2 am Pfahl 3 und dem Stützring 6 – dicht ausgebildet, d.h., es sind keine Perforationen oder Öffnungen vorhanden.

Gemäß einer nicht dargestellten Ausführungsform ist auch ein entsprechend großer Bereich am anderen Ende 2" des Folienschlauches 2 frei von Perforationen.

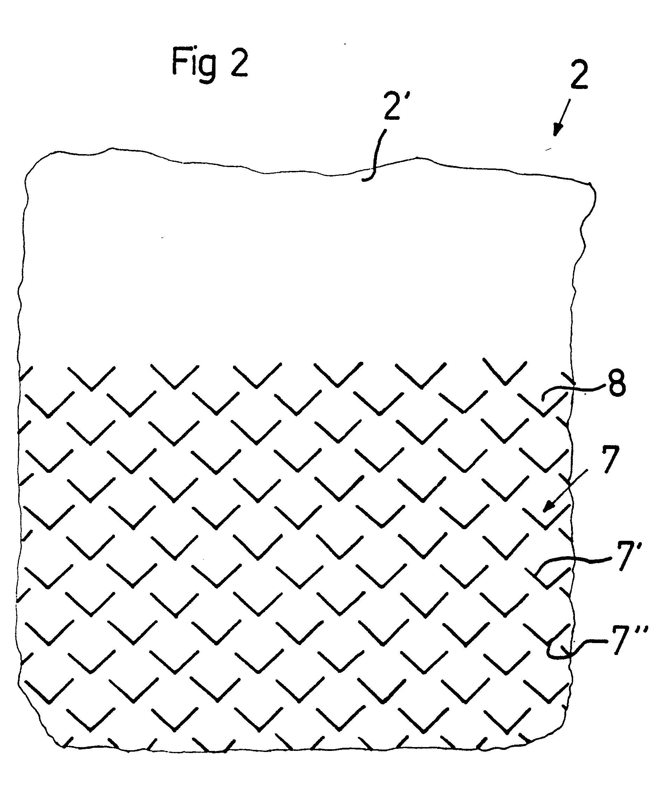

Zwischen diesen beiden Bereichen bzw. außerhalb des einen Bereiches bei der Ausführungsform nach Figur 1 ist der Folienschlauch 2 mit Schlitzen 7 versehen, die gemäß den Figuren, insbesondere Figur 2, V-förmig ausgebildet sind.

Gemäß einer weiteren, nicht dargestellten Ausführungsform, sind anstelle der V-förmig ausgebildeten Schlitze 7 schuppenförmige Schlitze vorgesehen, deren freie Enden an denselben Stellen liegen, wie die freien Enden der Schenkel 7' der V-förmigen Schlitze 7 und deren Wölbung ebenso ausgerichtet ist, wie die zwischen den Schenkel 7' liegende Lasche 8.

Die V-förmigen Schlitze 7 sind in zueinander parallelen Reihen angeordnet, wobei die Reihen parallel zur Längsachse des Folienschlauches 2 ausgerichtet sind. Die Schlitze 7 benachbarter Reihen sind dabei gegeneinander versetzt angeordnet. Zwischen den Schlitzen 7 verbleiben Stege. Es ergibt sich somit zwischen den Reihen von Schlitzen 7 eine Reihe von aufeinanderfolgenden Stegen, wobei letztere Reihe zick-zack-förmig ausgebildet ist.

Senkrecht zu der Längsachse ergeben sich, wie insbesondere Figur 2 zeigt, weitere zueinander parallele Reihen von Schlitzen 7 und von Stegen, wobei auch hier die Stegreihen zick-zack-förmig ausgebildet sind. An diesen Stegreihen sind, in den Figuren jeweils nach unten "hängend", die zwischen den Schenkeln 7' der Schlitze 7 verbleibenden Laschen 8 angeordnet.

Die Schenkel 7' der V-förmig ausgebildeten Schlitze 7 weisen zwischen sich einen Winkel auf, der hier etwa 90° beträgt. Die Schenkel 7' der einen Reihe, hier sowohl der vertikalen Reihen, als auch der horizontalen Reihen, sind nun so ausgerichtet und angeordnet, daß eine durch sie gelegte Gerade den jeweils anderen Schenkel 7' des Schlitzes 7 einer benachbarten Reihe beabstandet von dessen Spitze 7" schneidet. Dieser Abstand entspricht hier etwa einem Viertel der Länge der Schenkel 7' und kann zweckmäßigerweise zwischen einem Drittel und einem Fünftel der Länge betragen.

Der Abstand des freien Endes eines Schenkels 7' eines Schlitzes 7 einer Reihe von dem nächsten Schenkel 7' des Schlitzes 7 einer benachbarten Reihe entspricht hier etwa der halben Schenkellänge.

Der Folienschlauch 2 kann nun auf verschiedene Art und Weise so gedehnt werden, daß sich die Schlitze öffnen. Die innerhalb der Schutzhaube 1 wachsenden Pflanzen können eine Querdehnung auf den Schlauch 2 ausüben, wodurch eine Längenkontraktion desselben erfolgt. Der Folienschlauch 2 kann aber auch durch axiales Verschieben des oberen Endes 2' des Schlauches 2 am Pfahl 3 längs gedehnt werden. Durch dieses Dehnen verwinden sich die Stege und es entstehen in ihnen Spannungen. Die Laschen zwischen den Schenkeln 7' der V-förmig ausgebildeten Schlitze 7 bzw. die Schuppen der schuppenförmigen Schlitze weisen diese Spannungen jedoch nicht auf. Da der Folienschlauch hohlzylinderförmig ausgebildet ist, wölben sich die Laschen 8 bzw. Schuppen immer nach außen auf..

Durch die Versetzung der Schlitze 7 tropft auf der Schutzhaube 1 herabrinnendes Wasser, wenn die Laschen 8, wie in Figur 1 gezeigt, nach unten gerichtet sind, von einer vorgewölbten Lasche 8 auf die nächste Lasche und kann nicht in das Innere des Folienschlauches 2 eindringen.

Sind die Laschen 8 jedoch nach oben gerichtet, also entgegen der Darstellung gemäß Figur 1, so fangen die nach außen gewölbten und nach oben gerichteten Laschen 8 das herabrinnende Wasser auf und leiten es in das Innere des Folienschlauchs 2. Eine solche Ausbildung kann insbesondere in Trockengebieten von Bedeutung sein.

Gemäß einer nicht dargestellten Ausführungsform wird der Folienschlauch durch drei oder mehr Stäbe, die in den Erdboden gesteckt werden, aufgespannt, sodaß der Folienschlauch um eine aufzuziehende Pflanze herum gehalten wird, ohne die Pflanze zu berühren.

Je nach Ausbildung des Folienschlauches und insbesondere des Flächengewichtes der Folie können sich die Laschen auch lediglich durch den freien Fall der Folie öffnen.

## Ansprüche

1. Schutzhaube zur Aufzucht von an Stützen, wie Pfählen, Stickeln od.dgl. hochzuziehenden Kulturpflanzen, insbesondere Tomatenpflanzen, die aus einem mit schlitzartigen Öffnungen versehenen Folienschlauch besteht, dessen eines Ende an der Stütze und dessen anderes Ende am oder im Erdboden festlegbar ist, wobei die schlitzartigen Öffnungen in zu der Längsache des Folienschlauches parallelen Reihen ausgerichtet sind und Schlitzartige Öffungen einander benachbarter Reihen gegeneinander versetzt angeordnet sind, dadurch gekennzeichnet, daß der Folienschlauch (2) V- oder schuppenförmig ausgebildete Schlitze (7) aufweist und die freien Enden der Schenkel (7') der V- oder schuppenförmigen Schlitze (7) auf das eine Ende (2') des Folienschlauches (2) zu und die Spitze (7") bzw. die Wölbung der V- oder schuppenförmigen Schlitze (7) auf das andere Ende (2") des Folienschlauches (2) zu weisen.

2. Schutzhaube nach Anspruch 1, dadurch gekennzeichnet, daß der Winkel zwischen den Schenkeln (7") der V-förmig ausgebildeten Schlitze (7) etwa 90° beträgt.

3. Schutzhaube nach einem der vorhergehenden Ansprüche, dadurch gekennzeichnet, daß eine durch einen Schenkel (7') eines V-förmig ausgebildeten Schlitzes (7) gelegte Gerade einen auf dieser Gerade etwa senkrecht stehenden Schenkel (7') eines V-förmig ausgebildeten Schlitzes (7) der benachbarten Reihe beabstandet von der Spitze (7") dieses zweiten Schlitzes (7) schneidet.

4. Schutzhaube nach dem vorhergehenden Anspruch, dadurch gekennzeichnet, daß dieser Abstand etwa einem Drittel bis einem Fünftel, vorzugsweise einem Viertel der Länge dieses Schenkels (7') entspricht.

5. Schutzhaube nach einem der beiden vorhergehenden Ansprüche, dadurch gekennzeichnet, daß der Abstand des freien Endes des einen Schenkels (7') von dem anderen Schenkel (7') des benachbarten Schlitzes (7) etwa der halben Länge des Schenkels (7') entspricht.

6. Schutzhaube nach einem der vorhergehenden Ansprüche, dadurch gekennzeichnet, daß mindestens im Bereich des einen axialen Endes (2') des Folienschlauches (2), auf das die Schenkel (7') der V- oder schuppenförmigen Schlitze (7) zuweisen, keine Schlitze (7) vorgesehen sind.

7. Schutzhaube nach dem vorhergehenden Anspruch, dadurch gekennzeichnet, daß an beiden Enden (2', 2") des Folienschlauches (2) insbesondere gleich große Bereiche vorgesehen sind, in denen sich keine Schlitze (7) befinden.

## Claims

1. Protection cap for the culture of cultivated plants which grow heightwise, in particular tomato plants, on supports such as posts, stakes or the like, comprising a tube of sheet material provided with slit-shaped openings and capable of being secured at one end to the support and at its other end on or in the ground, the slit-shaped openings being directed in rows parallel to the longitudinal axis of the tube and slit-shaped openings of mutually adjacent rows being off-set with respect to one another, characterised in that the tube (2) of sheet material has slits (7) of V-shape or scale form and the free ends of the limbs (7') of the V-shaped or scale-like slits (7) point to the one end (2') of the tube (2) and the tips (7") or the curvature of the V-shaped or scale-like slits (7) point to the other end (2") of the tube (2) of sheet material.

2. Protection cap according to claim 1 characterised in that the angle between the limbs (7") of the V-shaped slits (7) amounts to about 90°.

3. Protection cap according to one of the foregoing claims characterised in that a straight line laid through a limb (7') of a slit (7) of V-shape intersects a limb (7') standing about perpendicular to this straight line of a V-shaped slit (7) of the adjacent row spaced away from the tip (7") of this second slit (7).

4. Protection cap according to the foregoing claim characterised in that this spacing corresponds to about a third to a fifth, preferably a quarter of the length of this limb (7').

5. Protection cap according to one of the two preceding claims characterised in that the spacing of the free end of the one limb (7') from the other limb (7') of the adjacent slit (7) corresponds to about half the length of the limb (7').

6. Protection cap according to one of the foregoing claims characterised in that at least in the region of the one axial end (2') of the tube (2) of sheet material to which the limbs (7') of the V-shaped or scale-like slits (7) point has no slits (7) provided in it.

7. Protection cap according to the foregoing claim characterised in that regions, especially of the same size, are provided at both ends (2',2") of the tube (2) in which no slits (7) are present.

## Revendications

1. Capuchon de protection pour la culture de plants à cultiver sur des tuteurs, tels que pieux, perches et autres, notamment de plants de tomates, composé d'un tube flexible en film plastique pourvu d'ouvertures en forme de fentes, dont l'une des extrémités peut être fixée au tuteur et l'autre extrémité au ou dans le sol, les ouvertures en forme de fentes étant orientées suivant des rangées parallèles à l'axe longitudinal du tube flexible en film plastique et les ouvertures en forme de fentes de rangées adjacentes étant décalées les unes par rapport aux autres, caractérisé en ce que le tube flexible en film plastique (2) présente des fentes (7) réalisées en forme de V ou squamiformes et que les extrémités libres des côtés (7') des fentes (7) en forme de V ou squamiformes sont dirigées vers l'une (2') des extrémités du tube flexible en film plastique (2) et la pointe (7") ou l'arrondi des fentes (7) en forme de V ou squamiformes est dirigé vers l'autre extrémité (2") du tube flexible en film plastique (2).

2. Capuchon de protection suivant la revendication 1, caractérisé en ce que l'angle entre les côtés (7") des fentes (7) réalisées en forme de V est d'environ 90°.

3. Capuchon de protection suivant l'une des revendications précédentes, caractérisé en ce qu'une droite passant par un côté (7') d'une fente (7) réalisée en forme de V vient en intersection avec un côté (7'), situé environ verticalement sur cette droite, d'une fente (7) réalisée en forme de V de la rangée adjacente, à une distance de la pointe (7") de cette seconde fente (7).

4. Capuchon de protection suivant la revendication précédente, caractérisé en ce que cette distance correspond à environ d'un tiers à un cinquième, de préférence un quart de la longueur de ce côté (7').

5. Capuchon de protection suivant l'une des deux revendications précédentes, caractérisé en ce que la distance entre l'extrémité libre d'un côté (7') et l'autre côté (7') de la fente adjacente (7) correspond à environ la moitié de la longueur du côté (7').

6. Capuchon de protection suivant l'une des revendications précédentes, caractérisé en ce qu'il n'est pas prévu de fentes (7) au moins dans la zone de l'une (2') des extrémités axiales du tube flexible en film plastique (2), vers lequel sont orientés les côtés (7') des fentes (7) en forme de V ou squamiformes.

7. Capuchon de protection suivant la revendication précédente, caractérisé en ce qu'il est prévu, aux deux extrémités (2', 2") du tube flexible en film plastique (2), des zones en particulier de même grandeur, dans lesquelles il n'y a pas de fentes (7).

Fig 1

Fig 2